(19) Europäisches Patentamt
European Patent Office
Office européen des brevets

(11) Veröffentlichungsnummer: **0 250 968 A1**

(12) **EUROPÄISCHE PATENTANMELDUNG**

(21) Anmeldenummer: **87108444.8**

(51) Int. Cl.4: **C08K 5/46** , C08L 77/00

(22) Anmeldetag: **11.06.87**

(30) Priorität: **24.06.86 DE 3621038**

(43) Veröffentlichungstag der Anmeldung:
**07.01.88 Patentblatt 88/01**

(84) Benannte Vertragsstaaten:
**CH DE ES FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Buysch, Hans-Josef, Dr.**
**Brandenburger Strasse 28**
**D-4150 Krefeld(DE)**
Erfinder: **Gelhaar, Hans-Georg, Dr.**
**Wupperstrasse 1**
**D-4047 Dormagen(DE)**
Erfinder: **Istel, Erich, Dr.**
**Friedrich-Ebert-Strasse 3**
**D-4047 Dormagen(DE)**
Erfinder: **Zimmermann, Franz**
**Am Hasenberg 30**
**D-4040 Neuss(DE)**

(54) **Stabilisierte Polyamide.**

(57) Polyamide werden durch Phenothiazine stabilisert.

EP 0 250 968 A1

Xerox Copy Centre

## Stabilisierte Polyamide

Gegenstand der Erfindung sind stabilisiertePolyamide, die Phenothiazinverbindungen als Stabilisatoren enthalten.

Aus BE-PS 703 500 und DE-A-2 605 794 ist bekannt, daß Polyamide durch Zusatz von Cu-Verbindungen in Kombination mit Halogenverbindungen gegen thermischen und oxidativen Abbau stabilisiert werden können.

Dabei werden jedoch die Möglichkeiten, solche Polyamide in feuchtem Milieu einzusetzen, stark eingeschränkt, da diese ionischen Stabilisatoren durch Wasser oder wäßrige Flüssigkeiten rasch aus dem Polyamid extrahiert werden. Dies trifft besonders zu für Polyamide, die zu Garnen, Monofilen und technischen Geweben verarbeitet werden und demgemäß eine große Oberfläche aufweisen. Derartige Produkte sind erst recht abbauenden Einflüssen ausgesetzt, wenn sie beispielsweise als schnellaufende Siebe zur Gewinnung von Papier aus der wäßrigen Pulpe unter dauern den extremen Zug-und Druckbeanspruchungen, bei erhöhter Temperatur und gegebenenfalls in Gegenwart von oxidierenden Bleichmitteln eingesetzt werden.

Aus Firmenschriften der Ciba-Geigy, Publ. Nr. 770.512/d/Str./10, Publ. Nr. 770.620/d/Str./10 ist bekannt, phenolische Antioxidantien zu verwenden. Diese haben unter den oben geschilderten Bedingungen Vorteile gegenüber den ionischen Verbindungen, sie sind insbesondere extraktionsbeständiger.

Gemäß der Deutschen Auslegeschrift 1 152 252 werden Kondensationsprodukte aus Aceton und Diphenylamin und gemäß der EP-A-84 108 oligomere Diphenylaminderivate zur Stabilisierung eingesetzt.

Der hiermit erreichte Schutz gegen Oxidation reicht jedoch nicht aus. Aufgabe der voliegenden Erfindung war es daher, verbesserte Polyamide bereitzustellen.

Gegenstand der Erfindung sind Polyamide mit wenigstens einem Stabilisator, dadurch gekennzeichnet, daß als Stabilisator wenigstens ein Phenothiazin mit einem Molekulargewicht von wenigstens 400, insbesondere wenigstens 500, enthalten ist.

In einer bevorzugten Ausführungsform entsprechen die Phenothiazine der folgenden allgemeinen Struktur I

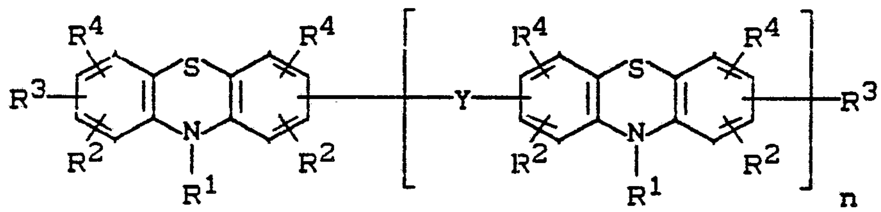

I

worin

$R^1$ $C_1$-$C_6$-Alkyl, $C_5$-$C_6$-Cycloalkyl, $C_3$-$C_5$-Alkenyl, vorzugsweise $C_7$-$C_{10}$-Aralkyl, besonders bevorzugt H bedeuten,

$R^2$,$R^4$,$R^5$ gleich oder verschieden sind und H, $CH_3$ oder $C_2H_5$, vorzugsweise H bedeuten,

$R^3$ H, $C_4$-$C_{12}$-Alkyl, $C_6$-$C_9$-Cycloalkyl, $C_5$-$C_9$-Alkylcycloalkenyl, $C_5$-$C_9$-Cycloalkylalkenyl und $C_7$-$C_{12}$-Aralkyl, vorzugsweise

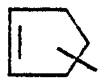 , 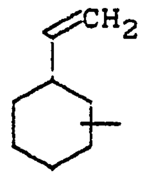 , 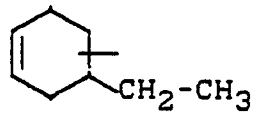 ,

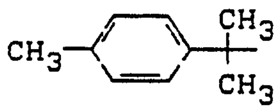 , 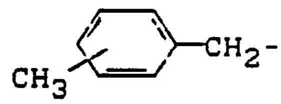 ,

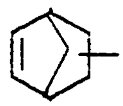

Isononyl-, Cyclohexyl-und Methylcyclohexyl darstellt, insbesondere aber H, Benzyl-, Styryl-, $\alpha$-Methylstyryl-, tert.-Butyl-, tert.-Amyl-,

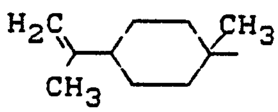 , 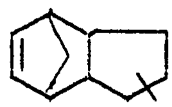 , 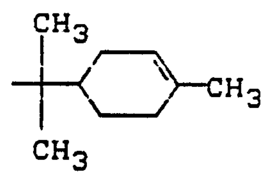 ,

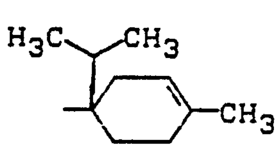 , 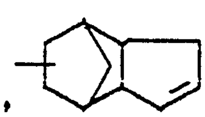 , 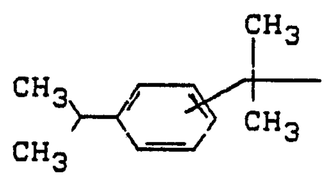 ,

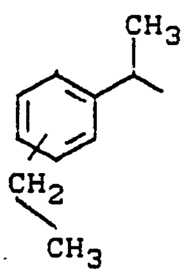 , 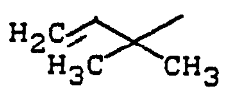 ,

n eine ganze Zahl insbesondere von 1-29, vorzugsweise von 1-19 darstellt und
Y

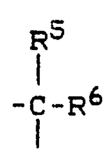

bedeutet, wobei $R^5$ die oben angegebene Bedeutung hat, vorzugsweise aber H ist und wobei $R^6$ $C_1$-$C_7$ -(vorzugsweise $C_1$-$C_4$) Alkyl, Cyclohexyl, Cyclohexenyl, Aryl bedeutet,
Y ist ferner bevorzugt:

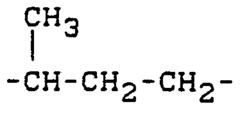, 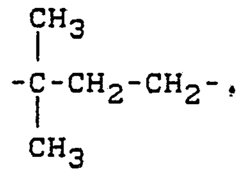, 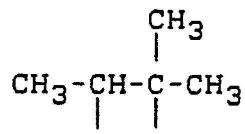,

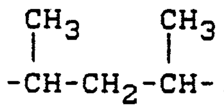, 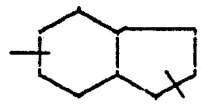, 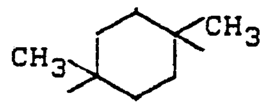,

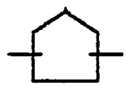, 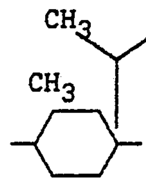, 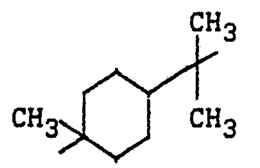,

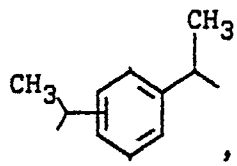, 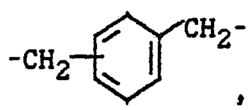, 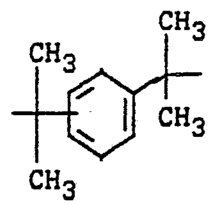,

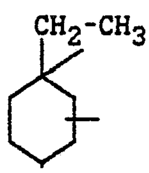, 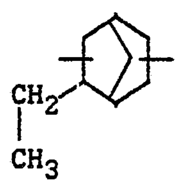

oder -S-, $-CH_2-$, vorzugsweise $-CH_2-$, wobei bei n >1 die Gruppe Y vorzugsweise bis zu 50 Mol-% -S-oder $-CH_2$-bedeutet und
wobei in Formel I ein mehrfach auftretender Substituent bei jeder Substitution eine andere aus den angegebenen Bedeutungen annehmen kann. Jeder Substituent kann substituiert sein, insbesondere mit den bei Stabilisatoren auf dem Polyamidgebiet üblichen Substituenten, beispielsweise mit einem Ether oder Thioether.

In einer anderen bevorzugten Ausführungsform entspricht das Phenothiazin der folgenden allgemeinen Struktur II

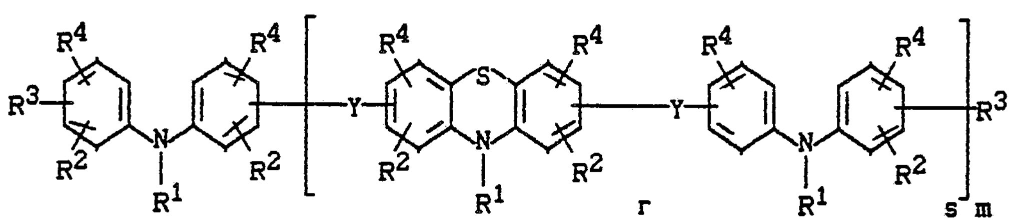

(II)

worin die Substituenten die oben angegebene Bedeutung haben und

r, s, m gleich oder verschieden sind und eine ganze Zahl, bevorzugt 1 bis 29, insbesondere 1 bis 9 bedeuten und

wobei ein mehrfach auftretender Substituent bei jeder Substitution eine andere aus den angegebenen Bedeutungen annehmen kann.

Überraschenderweise sind die erfindungsgemäß zu verwendenden Phenothiazine hervorragende Stabilisatoren für Polyamide gegen oxidativen Abbau. Aus der EP-A-70 436 sind zwar schon Polyurethan-Schaumstoffe mit einem Gehalt an Phenothiazinen bekannt, jedoch ohne Hinweis auf Polyamide.

Mit den erfindungsgemäß zu verwendenden Phenothiazinen ausgerüstete Polyamide behalten wesentlich länger ihre guten mechanischen Eigenschaften als die mit den oben genannten Phenol-und Diphenylaminderivaten stabilisierten Polyamide selbst unter extremen Bedingungen.

Sie werden im allgemeinen in Mengen von 0,05 - 8 Gew.-%, vorzugsweise 0,1 - 5 Gew.-%, besonders bevorzugt 0,2 -3 Gew.-% den Polyamiden zugesetzt. Die Einarbeitung kann nach üblichen Techniken, z.B. durch Einmischen in einem Extruder, erfolgen oder aber durch Auftrudeln auf das Granulat sowie Zugabe des Stabilisators zu dem gesamten Monomeren vor der Polykondensation und schließlich über ein Stabilisatorkonzentrat.

Polyamide im Sinne der vorliegenden Erfindung sind insbesondere aliphatische Polyamide, z.B. aus Laurinlactam, Oenanthlactam, ω-Aminoundecansäure, Hexamethylendiamin und Azelainsäure usw., besonders aber aus ε-Caprolactam, Hexamethylendiamin und Adipinsäure, deren Copolymeren und Copolymeren mit anderen Polyamiden sowie mechanische Mischungen aus diesen Produkten.

Neben den Phenothiazinen können die Polyamide übliche weitere Zuschläge enthalten wie Füll-und Verstärkerstoffe, Gleit-und Entformungsmittel, Nukleierungsmittel, Pigmente, Farbstoffe, Antistatica, Weichmacher, UV-Stabilisatoren in bekannten Mengen.

Die erfindungsgemäß stabilisierten Polyamide eignen sich hervorragend für die Herstellung von technischer Seide für Fischnetze, Treibriemen, Förderbänder, Reifencord oder Formkörper besonders Monofilen, die einer thermischen Belastung bei freiem Zutritt von Luft, Sauerstoff sowie anderen Oxidationsmitteln wie Bleichmitteln in der Preßpartie eine Papiermaschine ausgesetzt sind.

Die erfindungsgemäß zu verwendenden Phenothiazine können nach den in der EP-A 70 436 angegebenen Verfahren hergestellt werden.

Beispiele für besonders bevorzugte Phenothiazine sind im folgenden angegeben:

| Beispiel | Verbindung |
|---|---|
| 1 | 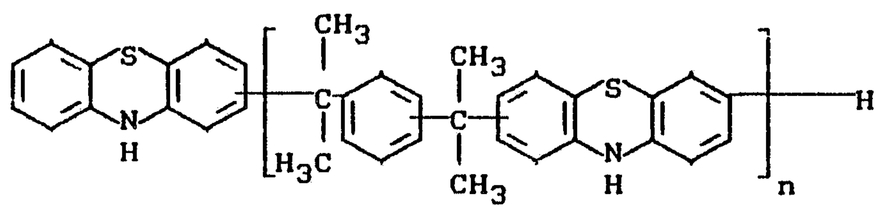 |
| 2 | 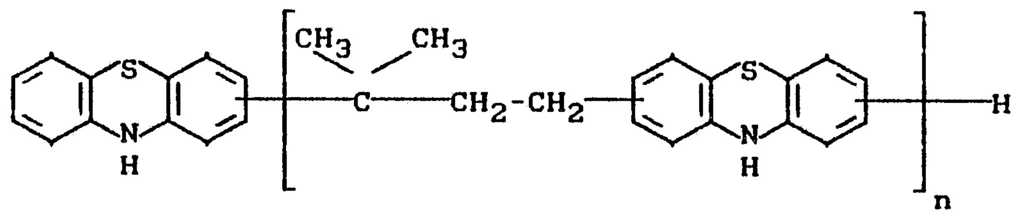 |
| 3 | 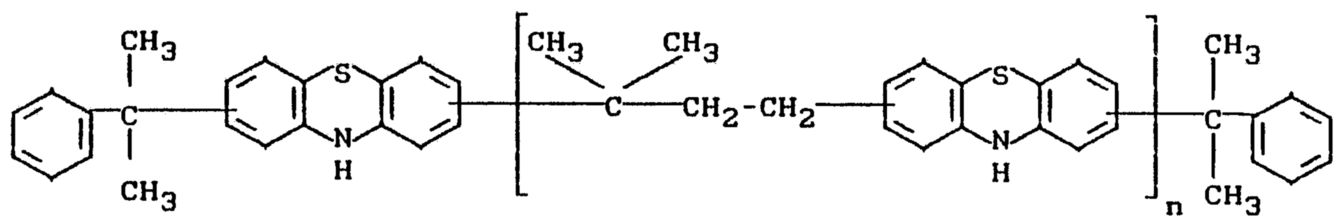 |
| 4 | 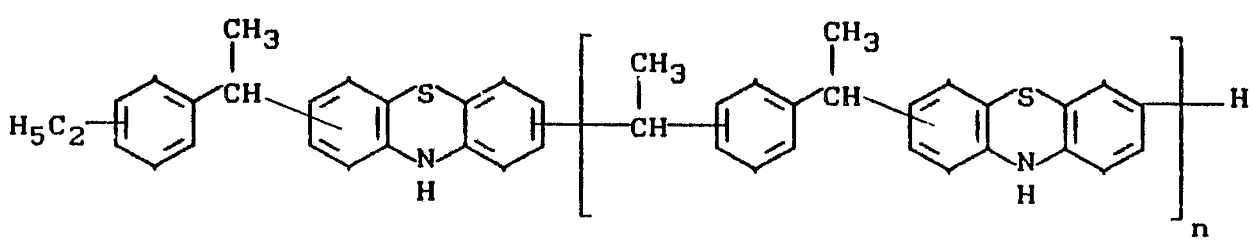 |

| Beispiel | Verbindung |
|---|---|
| 5 | 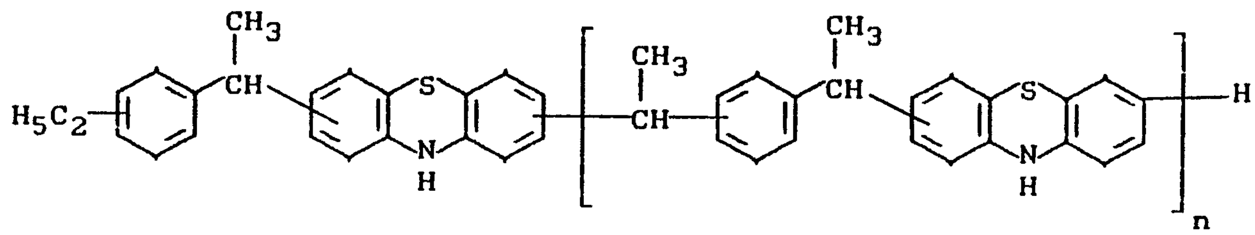 |
| 6 | 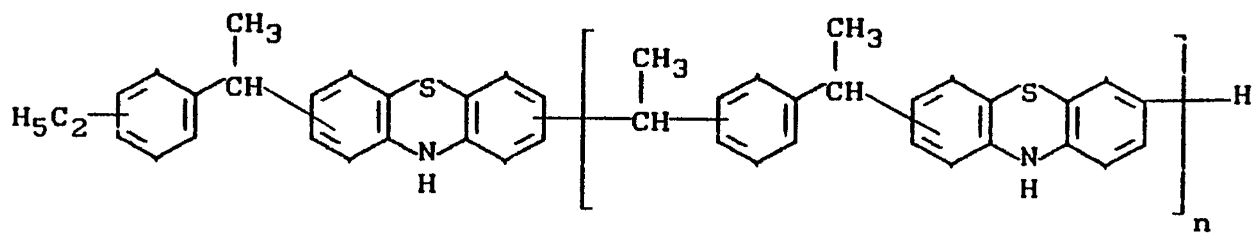 |
| 7 | 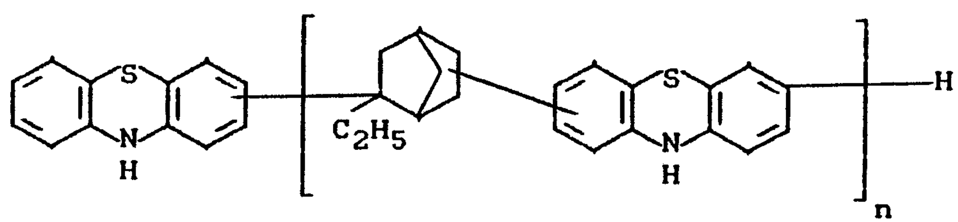 |
| 8 | 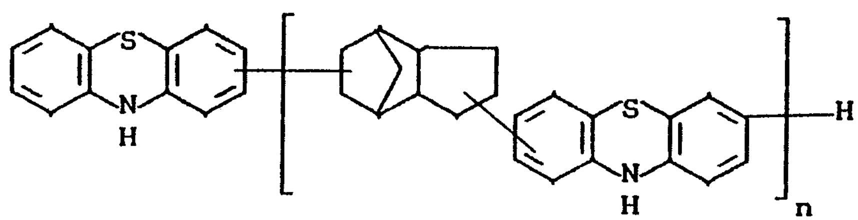 |

| Beispiel | Verbindung |
| --- | --- |
| 9 | 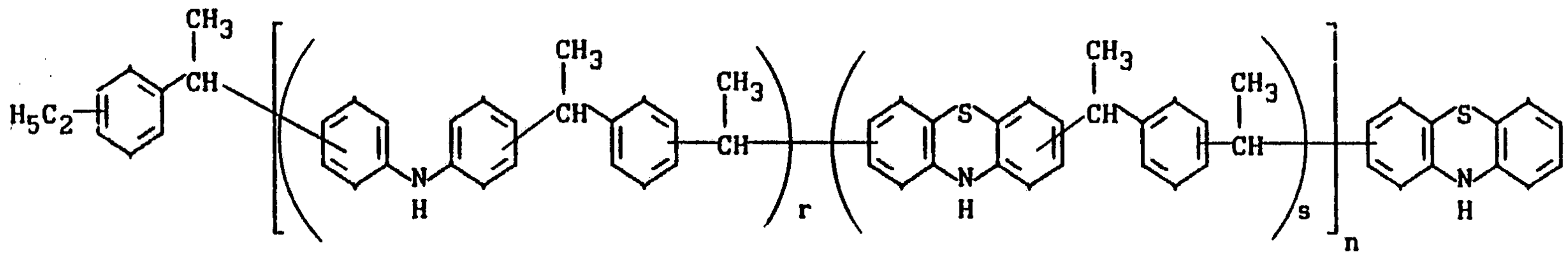 |
| 10 | 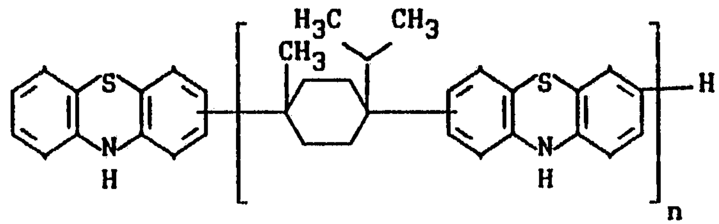 |
| 11 | 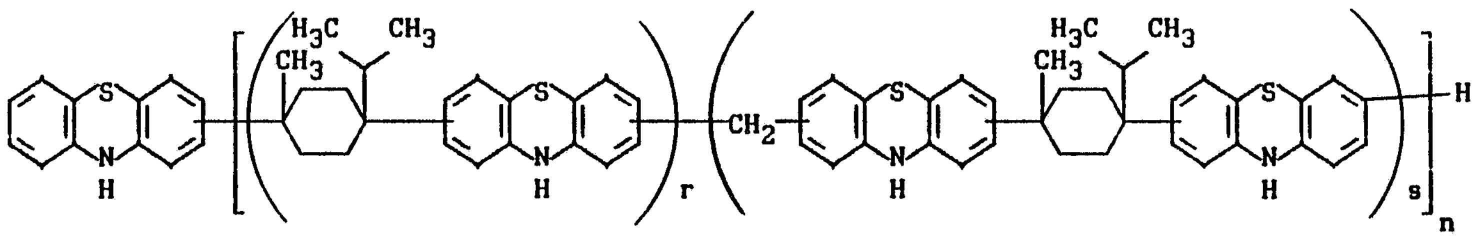 |
| 12 | 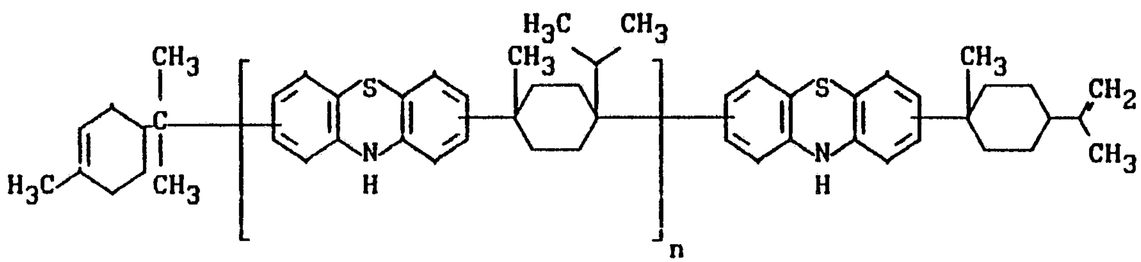 |

Die erfindungsgemäß zu verwendenden Phenothiazine können in üblicher Weise eingearbeitet werden, beispielsweise unter Verwendung eines Haftvermittlers.

Beispiele

In den folgenden Beispielen wurden die Phenothiazine folgendermaßen eingearbeitet:

0,15 Gew.-% (bezogen auf das zu stabilisierende Produkt) eines hydroxyalkylierten Phenoles als Haftvermittler werden auf das Polyamidgranulat, das sich in einem Taumelmischer befindet, gegeben. Granulat und Haftvermittler wird einige Minuten gemischt. Danach werden portionsweise 0,3 Gew.-% des Stabilisators hinzugefügt und endlich das Ganze 2 Stunden bei Raumtemperatur gleichmäßig gemischt.

In einem mit einem Schnellrührer ausgerüsteten Ansatzbehälter wird ein Gemisch aus 135,0 kg Caprolactam, 15,0 kg Wasser und 15,0 kg Stabilisator mit 0,15 Gew.-% Kettenregler (Essigsäure) homogenisiert und anschließend in einen Polymerisationsautoklaven gefüllt. Unter Rühren wird das Gemisch bei einem Wasserdampfdruck von 4-5 bar in ca. 1-1,5 Stunden auf 260°C erhitzt. Nach 3 Stunden wird der Autoklav entspannt und die Schmelze unter Rühren mit einem trockenen Stickstoff-Strom von 50 l/Stunde nachkondensiert. Hiernach wird die Schmelze auf einem Gießband verkabelt und granuliert.

Eingesetzt wurden:

A) Stabilisator Beispiel 10

B) 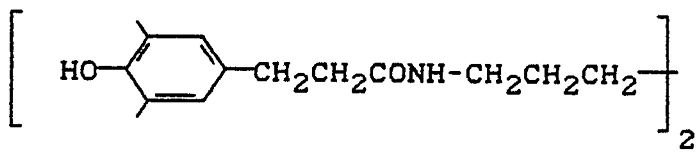

entsprechend der o.a. Firmenschrift der Ciba-Geigy, Publ.-Nr. 770.512/d/Str./10

C) 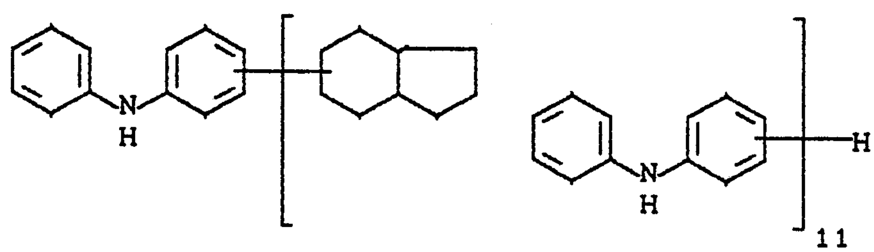

entsprechend EP 84 108, Beispiel 6

D) 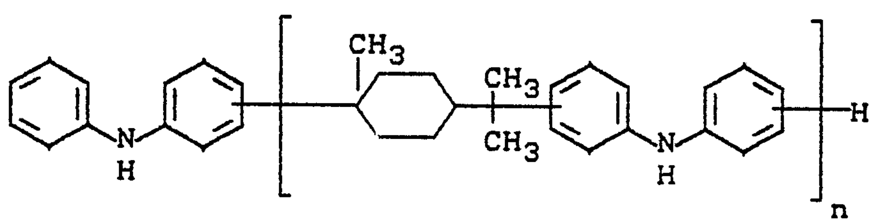

entsprechend EP 84 108, Beispiel 5

Beispiel 1

Die Stabilisatoren wurden je zu 0,3 Gew.-% eingesetzt, daß Polyamid (PA 6 mit $\eta_{rel.}$ ca. 4,0) in einem Laborversuch zu Monofilen von 0,20 ø versponnen und die Fäden bei 185° bis 190° in einem Umluft-Heizschrank gealtert, wobei die Position der Proben ständig verändert wurde, um Temperaturunterschiede auszugleichen. Am Ausgangsmaterial und an den gealterten Fäden wurde die Reißkraft gemessen. Der Verlust an Reißkraft (Durchschnitt von je 20 Einzelmessungen) wurde in % bezogen auf den Ausgangswert angegeben, d.h. je größer die angegebene %-Zahl, desto größer der Reißkraftschwund und desto schlechter die Stabilisatorwirkung.

Prüfungsergebnisse:

| Stabilisator | Ausgangswert* | 2 h/ 185° C | 4 h/ 185° C | 2 h/ 190° C | 4 h/ 190° C |
|---|---|---|---|---|---|
| A | 1578 | -4 | -5 | -10 | -5 |
| B | 1526 | 2 | 11 | 5 | 16 |
| C | 1524 | 16 | 41 | 24 | 58 |
| D | 1658 | 2 | 5 | 0 | 7 |

* Die Reißkraft wird in (cN) angegeben.

Aus diesen Meßwerten resultiert eindeutig die überlegene Wirkung der erfindungsgemäßen Stabilisierung mit dem Produkt A aus Beispiel 10. Die negativen Zahlen deuten an, daß nach der angegebenen Alterung sogar ein Zuwachs in der Reißkraft beobachtet werden konnte, während die Vergleichsmischungen bis auf einen Fall bei D alle abfielen.

Beispiel 2

Die Stabilisatoren A und B wurden in einem Technikumsversuch zur Herstellung von Monofilen (PA 6, $\eta$ = 4,0) verwendet. Auch hier wurden 0,3 Gew.-% zugesetzt.

Diese Monofile wurden zunächst ebenfalls 4 Stunden bei 190°C, aber auch 13 Tage bei 160°C gealtert. Die erhaltenen Ergebnisse finden sich in der folgenden Tabelle. Auch hier ist der prozentuale Verlust an Reißkraft angegeben.

| Stabilisator | 4 h/190° | 13 d/160° |
|---|---|---|
| A | 17 | 35 |
| B | 20 | 90 |

Diese Daten zeigen, insbesondere bei einer Langzeitbehandlung, ebenfalls deutlich die Überlegenheit des Produktes A.

Schließlich zeigt ein Extraktionsvergleich zwischen den Stabilisatoren A und B in Monofilen (ø 0,2 mm) aus o.a. Technikumsversuch über 5 h bei 95°C in neutralem Wasser für Stabilisator A keine Extrahierbarkeit; Stabilisator B dagegen wird immer zu etwa 30 % eluiert.

## Ansprüche

1. Polyamide enthaltend wenigstens einen Stabilisator, dadurch gekennzeichnet, daß als Stabilisator wenigstens ein Phenothiazin mit einem Molekulargewicht von wenigstens 400 enthalten ist.

2. Polyamide nach Anspruch 1, dadurch gekennzeichnet, daß das Phenothiazin folgender Formel (I) entspricht

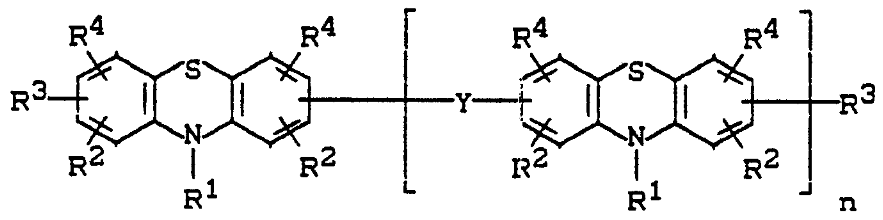

I

worin
$R^1$ $C_1$-$C_6$-Alkyl, $C_5$-$C_6$-Cycloalkyl, $C_3$-$C_5$-Alkenyl, $C_7$-$C_{10}$-Aralkyl, H bedeutet,
$R^2$, $R^4$ gleich oder verschieden sind und H, $CH_3$ oder $C_2H_5$ bedeuten,
$R^3$ H, $C_4$-$C_{12}$-Alkyl, $C_6$-$C_9$-Cycloalkyl, $C_5$-$C_9$-Alkylcycloalkenyl, $C_5$-$C_9$-Cycloalkylalkenyl und $C_7$-$C_{12}$-Aralkyl bedeutet,
n eine ganze Zahl ist und
Y

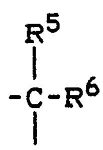

bedeutet, wobei $R^5$ eine unter $R^2$ genannte Bedeutung hat, und wobei $R^6$ $C_1$-$C_7$-Alkyl, Cyclohexyl, Cyclohexenyl oder Aryl ist, oder wobei Y bedeutet

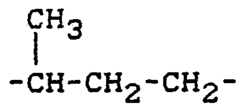,
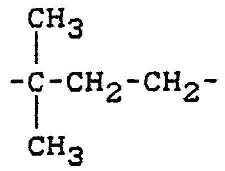,
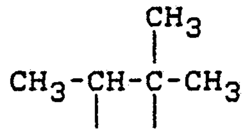,

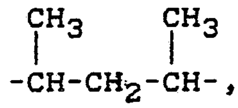,
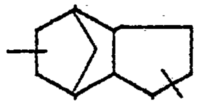,
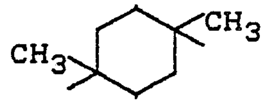,

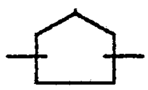,
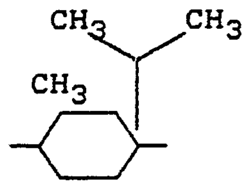,
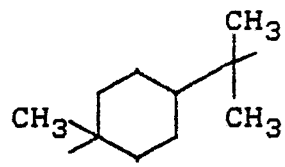,

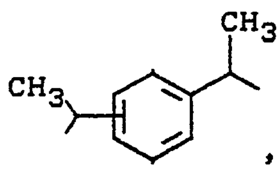,
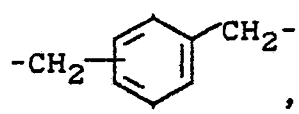,
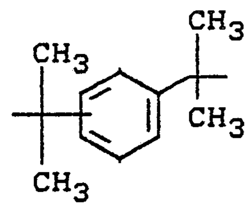,

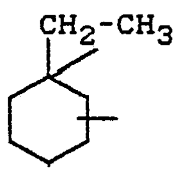,
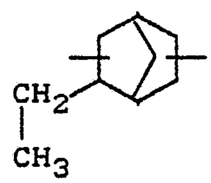

oder wobei Y -S-oder -$CH_2$-bedeutet wobei ein mehrfach auftretender Substituent bei jeder Substitution eine andere aus den angegebenen Bedeutungen annehmen kann.

3. Polyamide nach Anspruch 1, dadurch gekennzeichnet, daß

$R^3$ H, Benzyl-, Styryl-, α-Methylstyryl-, tert.-Butyl-, tert.-Amyl-,

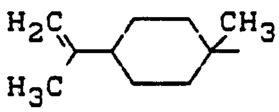, 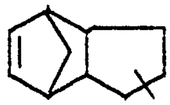, 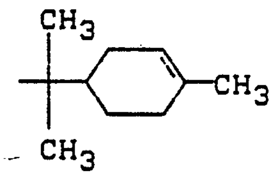,

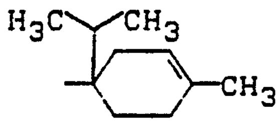, 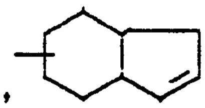, 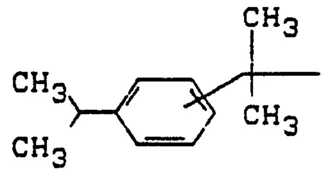,

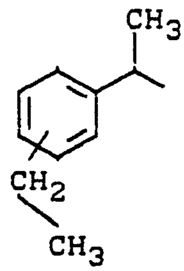, 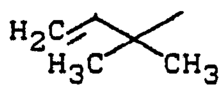,

bedeutet.

4. Polyamide nach Anspruch 1, dadurch gekennzeichnet, daß

$R^3$ 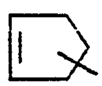, 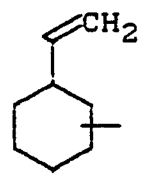, 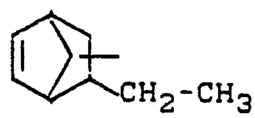,

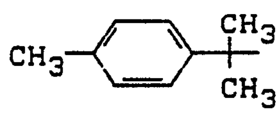, 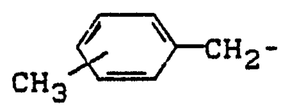,

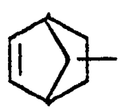

Isononyl-, Cyclohexyl-und Methylcyclohexyl darstellt.

5. Polyamid nach Anspruch 1, dadurch gekennzeichnet, daß der Stabilisator folgender Formel (II) entspricht

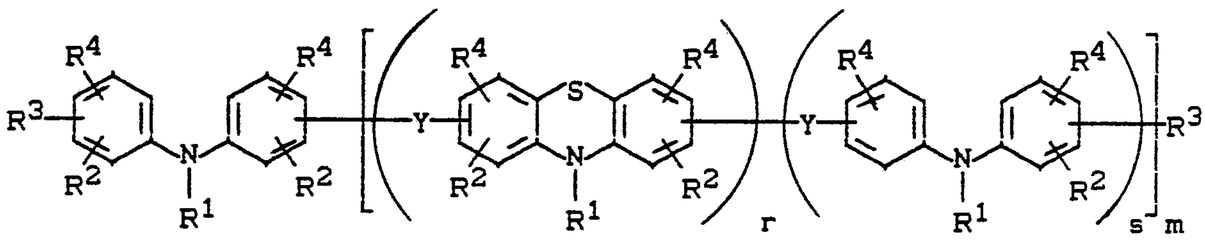

(II)

worin die Substituenten die oben angegebene Bedeutung haben und
r, s und m gleich oder verschieden sind und eine ganze Zahl bedeuten und wobei ein mehrfach auftretender Substituent bei jeder Substitution eine andere aus den angegebenen Bedeutungen annehmen kann.

6. Polyamide nach Ansprüchen 2 bis 5, dadurch gekennzeichnet, daß bedeuten
$R^1$ = H,
$R^2$ und $R^4$ = H
$R^3$ H, Benzyl, Styryl, α-Methylstyryl, tert.-Butyl, tert.-Amyl,

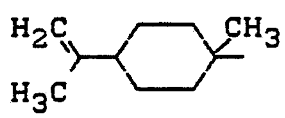, 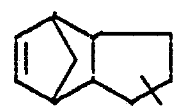, 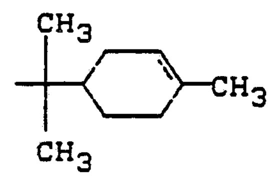,

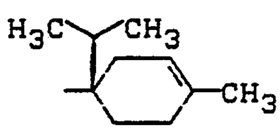, 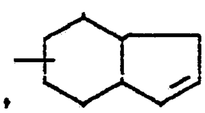, 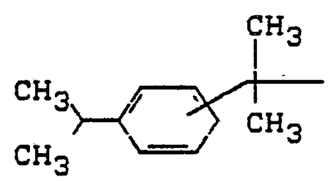,

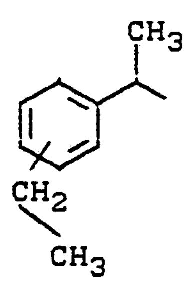, 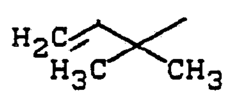,

und

Y 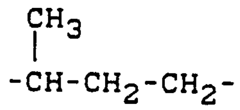, 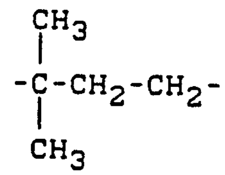, 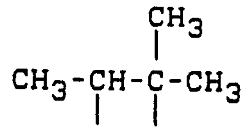,

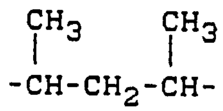, 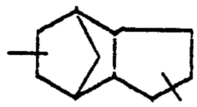, 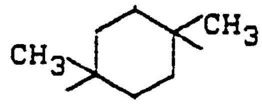,

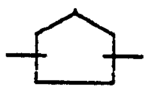, 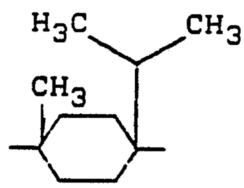, 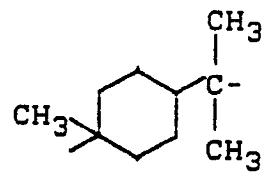,

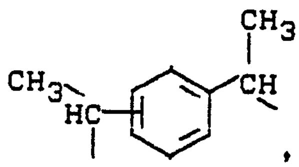, 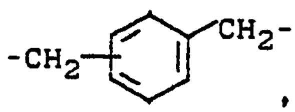, 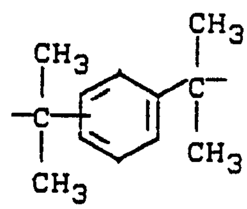,

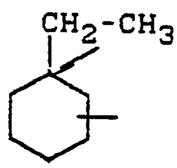, 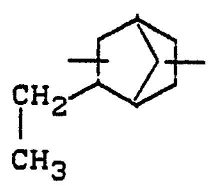

bedeuten, und wobei ein mehrfach auftretender Substituent bei jeder Substitution eine andere aus den angegebenen Bedeutungen annehmen kannt.

7. Polyamide nach Anspurch 1, dadurch gekennzeichnet, daß sie 0,2 bis 3 Gew.-% des Phenothiazins enthalten.

8. Verwendung der Polyamide nach Anspruch 1 zur Herstellung von Polyamid-Fasern.

9. Verwendung der Polyamide nach Anspruch 1, zur Herstellung von Polyamid-Monofilen.

Europäisches Patentamt

**EUROPÄISCHER RECHERCHENBERICHT**

Nummer der Anmeldung

EP 87 10 8444

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 156 390 (CIBA GEIGY) * Patentansprüche 1,9,10; Beispiele 1,2; Seite 7, Zeilen 6-8 * | 1,7-9 | C 08 K 5/46<br>C 08 L 77/00 |
| Y | | 2-6 | |
| | --- | | |
| Y,D | EP-A-0 070 436 (BAYER AG) * Patentansprüche 1,2 * | 2-6 | |
| | ----- | | |

| RECHERCHIERTE SACHGEBIETE (Int. Cl.4) |
|---|
| C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 15-10-1987 | HOFFMANN K.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82